# EUROPEAN PATENT APPLICATION

(11) **EP 4 576 340 A1**
(43) Date of publication of application: **25.06.2025**
(21) Application number: 23939892.8
(22) Date of filing: 07.12.2023
(51) Int. Cl.: H01M 10/6554, H01M 10/6551, H01M 10/6567, H01M 10/6556, H01M 10/613, H01M 10/627, H01M 50/244, H01M 50/251

(54) **BATTERY ARRAY**

(30) Priority: 26.05.2023 KR 20230068578
(71) Applicant: LG Energy Solution, Ltd., Seoul 07335 (KR)
(72) Inventor: LEE, Jeong-Won, Daejeon 34122 (KR); GANG, In-Jae, Daejeon 34122 (KR); JEONG, Chan-Young, Daejeon 34122 (KR); JO, Sang-Hyun, Daejeon 34122 (KR); CHO, Young-Bum, Daejeon 34122 (KR)
(74) Representative: BCKIP Part mbB
(86) International application number: PCT/KR2023/020094
(87) International publication number: WO 2024/248253

(57) **Abstract**

Provided is a battery array. A battery array having a structure in which a plurality of battery cell units are stacked in a vertical direction includes a first heat sink having a plate shape, a first battery cell unit seated on a top surface of the first heat sink, a first column coupled to the top surface of the first heat sink and extending in the vertical direction, and a second heat sink having a plate shape, located on the first column, and including a bottom surface coupled to the first column.

## Description

### TECHNICAL FIELD

The present disclosure relates to a battery array.

The present application claims priority to Korean Patent Application No. 10-2023-0068578 filed on May 26, 2023 in the Republic of Korea, the disclosures of which are incorporated herein by reference.

### BACKGROUND ART

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

Recently, as issues such as power shortage or eco-friendly energy have emerged, energy storage systems (ESSs) for storing produced power have attracted more attention. For example, a smart grid system has been proposed as one of methods for adjusting power supply and demand. The amount of electricity used by consumers is not always constant but may vary from time to time. For example, in summer, power consumption increases rapidly due to the use of cooling devices in the afternoon, and then rapidly decreases at night. As such, in terms of power consumption, power consumption is not constant and may vary frequently, but in terms of power supply, it is practically difficult to meet such power consumption even when power production is controlled to some extent. Accordingly, such imbalance between power supply and consumption may lead to power oversupply or shortage of power supply. A smart grid system may flexibly store and control power to solve such problems. A smart grid system may be a concept of storing power at a time or region where surplus power is generated and suppling the stored power to a time or region where a power shortage occurs. One of key components to build such a smart grid system may be an energy storage system for storing power. Also, as the commercialization of electric vehicles has progressed in earnest in recent layers, energy storage systems may be used in facilities for charging electric vehicles, for example, charging stations.

An energy storage system may include a plurality of battery arrays. The battery array may be formed by stacking a plurality of battery array units. The battery array unit may include a plurality of battery cell units. There is an increasing need for a structure in which a plurality of battery cells may be stacked while increasing the energy density of a battery array in a space of a limited height.

### DISCLOSURE

### Technical Problem

The present disclosure is designed to solve the problems of the related art.

The present disclosure is directed to providing a battery array with improved assemblability.

The present disclosure is directed to providing a battery array with a simplified structure.

The present disclosure is directed to providing a battery array with excellent cooling effect and high energy density.

### Technical Solution

In one aspect of the present disclosure, a battery array having a structure in which a plurality of battery cell units are stacked in a vertical direction includes a first heat sink having a plate shape, a first battery cell unit seated on a top surface of the first heat sink, a first column coupled to the top surface of the first heat sink and extending in the vertical direction, and a second heat sink having a plate shape, located on the first column, and including a bottom surface coupled to the first column.

Also, the battery array may further include a second battery cell unit seated on a top surface of the second heat sink.

Also, the battery array may further include a second column coupled to a top surface of the second heat sink and extending in the vertical direction.

Also, the second column may be located in a direction in which the first column extends.

Also, the battery array may further include a coupling pin passing through the second heat sink and including a lower portion inserted into the first column and an upper portion inserted into the second column.

Also, the first battery cell unit may include a front battery cell unit and a rear battery cell unit arranged in a front-back direction.

Also, the first column may include a middle column located between the front battery cell unit and the rear battery cell unit.

Also, the first column may include a front column located in front of the front battery cell unit, and a rear column located behind the rear battery cell unit.

Also, the first column may include one pair of front columns located in front of the front battery cell unit, wherein the battery array further includes a battery management system (BMS) located between the one pair of front columns and electrically connected to the battery cell unit.

Also, the first column may have a height greater than a height of the first battery cell unit.

Also, the battery array may further include an insulating cover located between the first battery cell unit and the second heat sink.

Also, the second heat sink may include an upper plate having a flat plate shape, and a lower plate including a coupling portion coupled to a bottom of the upper plate and a protrusion bent downward from the coupling portion, wherein the second heat sink is configured so that a cooling flow passage is formed between the upper plate and the protrusion.

Also, the cooling flow passage may include a plurality of first flow passages communicating with an inlet port and divided in a front-back direction, a plurality of second flow passages communicating with an outlet port and divided in the front-back direction, and a third flow passage configured to connect the plurality of first flow passages with the plurality of second flow passages.

In another aspect of the present disclosure, there is provided a battery array unit including a first heat sink having a plate shape, a first battery cell unit seated on a top surface of the first heat sink, and a first column coupled to the top surface of the first heat sink, extending in a vertical direction, and including an upper portion configured to be fastened to another component.

Also, in another aspect of the present disclosure, there is provided a battery container including the battery array of the present disclosure.

### Advantageous Effects

According to at least one of embodiments of the present disclosure, the energy density of a battery array may be improved.

According to at least one of embodiments of the present disclosure, the structural rigidity of a battery array may be improved.

According to at least one of embodiments of the present disclosure, the assemblability of a battery array may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.
FIG. 1 is a perspective view illustrating a battery array according to an embodiment of the present disclosure.
FIG. 2 is an exploded view illustrating some elements of the battery array according to an embodiment of the present disclosure.
FIG. 3 is an exploded view illustrating a heat sink of the battery array according to an embodiment of the present disclosure.
FIG. 4 is a view illustrating a cooling medium flowing through a heat sink of the battery array according to an embodiment of the present disclosure.
FIG. 5 is a view illustrating a heat sink and a coupling pin of the battery array according to an embodiment of the present disclosure.
FIG. 6 is a view illustrating a heat sink and a column of the battery array according to an embodiment of the present disclosure.
FIG. 7 is a view illustrating a heat sink, a column, and a battery cell unit of the battery array according to an embodiment of the present disclosure.
FIG. 8 is a view illustrating a heat sink, a column, a battery cell unit, and a cover of the battery array according to an embodiment of the present disclosure.
FIG. 9 is a view illustrating a heat sink, a column, a battery cell unit, a cover, and a battery management system (BMS) of the battery array according to an embodiment of the present disclosure.
FIG. 10 is a view illustrating stacking of the battery array according to an embodiment of the present disclosure.
FIG. 11 is a view illustrating a modified embodiment of a coupling pin of the battery array according to an embodiment of the present disclosure.
FIG. 12 is a view illustrating a modified embodiment of a column of the battery array according to an embodiment of the present disclosure.
FIG. 13 is a view illustrating some elements, taken along line A-A' of FIG. 1.
FIG. 14 is an enlarged view illustrating a portion B of FIG. 13.
FIG. 15 is an enlarged view illustrating a portion C of FIG. 13.
FIG. 16 is an enlarged view illustrating a portion D of FIG. 13.
FIG. 17 is a view illustrating the battery array and a case according to an embodiment of the present disclosure.
FIG. 18 is a view illustrating a state where the battery array and the case according to an embodiment of the present disclosure are coupled to each other.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

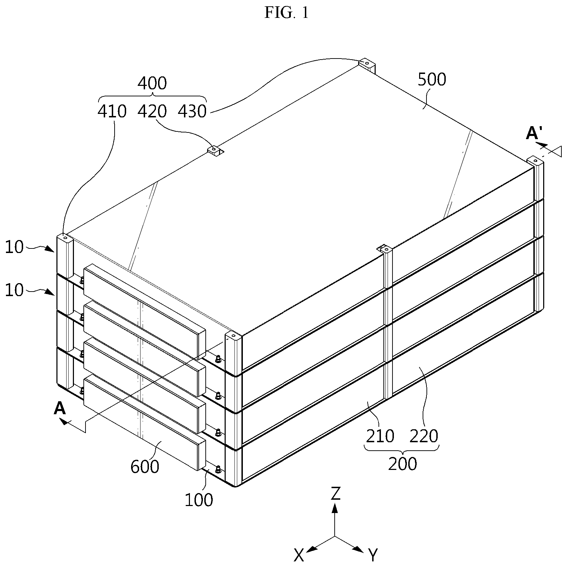

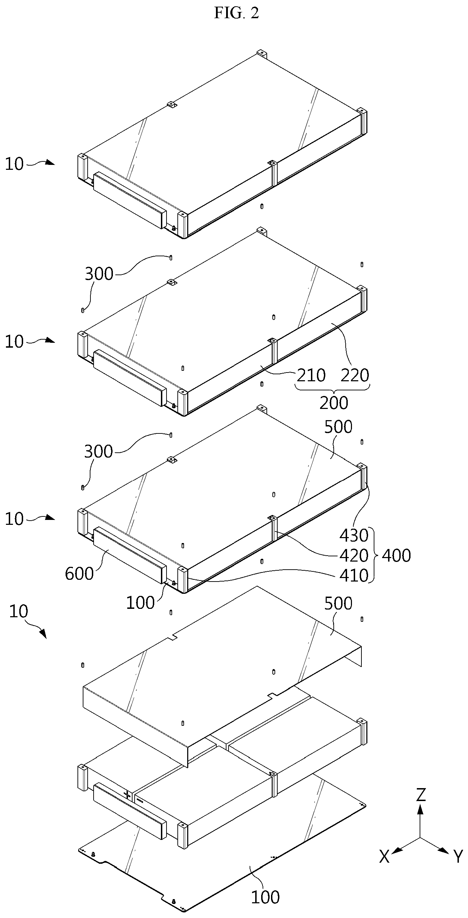

FIG. 1 is a perspective view illustrating a battery array according to an embodiment of the present disclosure. FIG. 2 is an exploded view illustrating some elements of the battery array according to an embodiment of the present disclosure. Referring to FIGS. 1 and 2, the battery array according to an embodiment of the present disclosure may have a structure in which a plurality of battery cell units 200 are stacked in a vertical direction. The battery array according to an embodiment of the present disclosure may include a first heat sink 100, a first battery cell unit 200, a first column 400, and a second heat sink 100.

The first heat sink 100 may have a plate shape. The first battery cell unit 200 may be seated, coupled, fixed, fastened, or attached to a top surface of the first heat sink 100. The first battery cell unit 200 may include one or more battery cells. In this case, the battery cell may refer to a secondary battery. For example, the battery cell may be a pouch-type secondary battery. The first heat sink 100 may be configured to dissipate heat generated from the first battery cell unit 200. A plurality of first battery cell units 200 may be provided.

The first column 400 may be seated, coupled, fixed, fastened, or attached to the top surface of the first heat sink 100. The first column 400 may extend in the vertical direction or a Z-axis direction. A plurality of first columns 400 may be provided.

The second heat sink 100 may have a plate shape, may be located on the first column 400, and may have a bottom surface seated, coupled, fixed, fastened, or attached to the first column 400. The second heat sink 100 may have substantially the same configuration or structure as the first heat sink 100.

According to this configuration of the present disclosure, the battery array may be easily stacked. In this case, because the heat sink 100 functions as a base plate to which the battery cell unit 200 is coupled, a stacked configuration may be simplified. Also, because the column 400 connects and couples the first heat sink 100 to the second heat sink 100, the column 400 may support a load of the battery array. Accordingly, a stacked configuration may be simplified. Accordingly, the energy density of the battery array in the vertical direction may be improved.

Referring to FIGS. 1 and 2, the battery array according to an embodiment of the present disclosure may be formed by stacking a plurality of battery array units 10 in the vertical direction. In this case, the battery array unit 10 according to an embodiment of the present disclosure may include the first heat sink 100 having a plate shape, the first battery cell unit 200 seated on the top surface of the first heat sink 100, and the first column 400 coupled to the top surface of the first heat sink 100, extending in the vertical direction, and including an upper portion configured to be fastened to another component. In this case, the other component fastened to the first column 400 may be another battery array unit 10 or the heat sink 100 of another battery array unit 10.

According to this configuration of the present disclosure, the battery array according to an embodiment of the present disclosure may include a plurality of battery array units 10 having the same structure or configuration. Accordingly, the battery array may be produced by stacking, assembling, fastening, or coupling the plurality of battery array units 10 that are completely assembled in the vertical direction. Accordingly, the productivity and energy density of the battery array may be improved.

Referring to FIGS. 1 and 2, the battery array according to an embodiment of the present disclosure may include a second battery cell unit 200 seated on a top surface of the second heat sink 100. The second battery cell unit 200 may have substantially the same configuration or structure as the first battery cell unit 200.

According to this configuration of the present disclosure, the battery array according to an embodiment of the present disclosure may be formed by stacking the same structure or configuration. Accordingly, the productivity and energy density of the battery array may be improved.

Referring to FIGS. 1 and 2, the battery array according to an embodiment of the present disclosure may include a second column 400 coupled to the top surface of the second heat sink 100 and extending in the vertical direction. The second column 400 may have substantially the same configuration or structure as the first column 400.

According to this configuration of the present disclosure, the battery array according to an embodiment of the present disclosure may be formed by stacking the same structure or configuration. Accordingly, the productivity and energy density of the battery array may be improved.

Referring to FIGS. 1 and 2, the second column 400 of the battery array according to an embodiment of the present disclosure may be located in a direction in which the first column 400 extends.

According to this configuration of the present disclosure, the second column 400 may transmit a load applied to the second heat sink 100 to the first column 400. Accordingly, a load of the battery array may be stably supported.

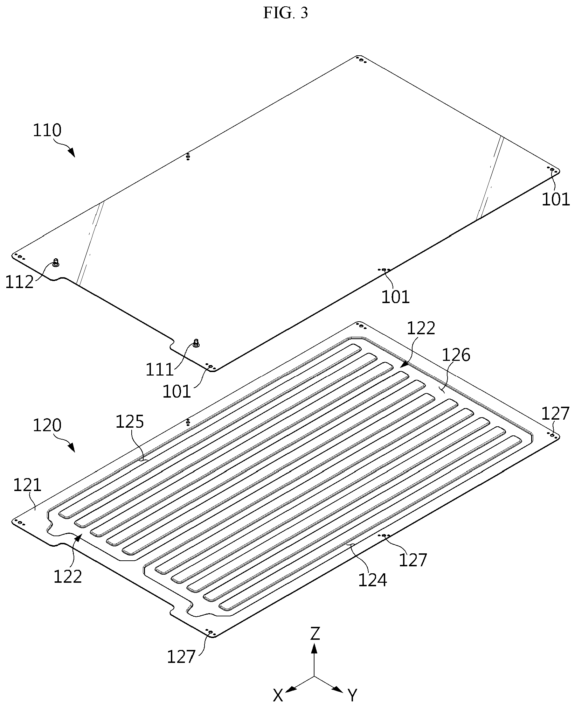

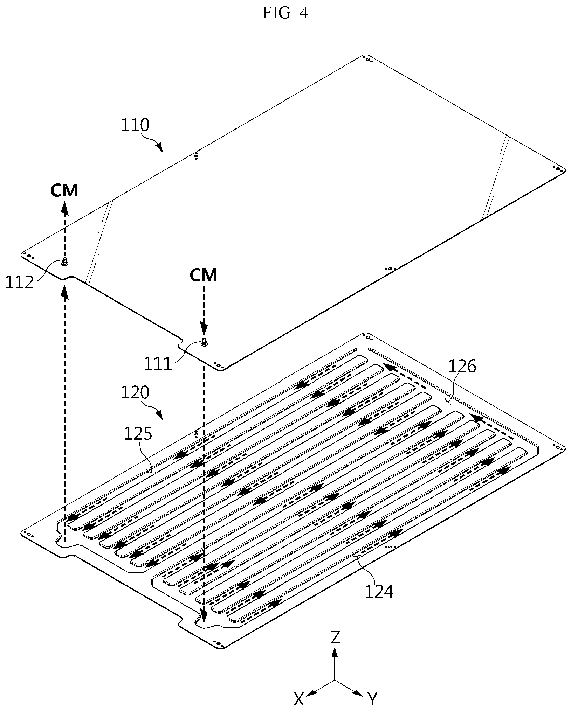

FIG. 3 is an exploded view illustrating the heat sink 100 of the battery array according to an embodiment of the present disclosure. FIG. 4 is a view illustrating a cooling medium flowing through the heat sink 100 of the battery array according to an embodiment of the present disclosure. Referring to FIGS. 3 and 4, the heat sink 100 of the battery array according to an embodiment of the present disclosure may include an upper plate 110 having a flat plate shape, and a lower plate 120 including a coupling portion 121 coupled to a lower portion of the upper plate 110 and a protrusion 122 bent downward from the coupling portion 121. The heat sink 100 may be configured so that a cooling flow passage is formed between the upper plate 110 and the protrusion 122.

The upper plate 110 may have a quadrangular plate shape. The upper plate 110 may have a flat plate shape.

The lower plate 120 may have a quadrangular plate shape. The lower plate 120 may be coupled, fastened, welded, or fixed to a bottom surface of the upper plate 110. The coupling portion 121 of the lower plate 120 may have a flat plate shape. The protrusion 122 may form a cooling flow passage.

According to this configuration of the present disclosure, the heat sink 100 may cool heat of the battery cell unit 200. Because the heat sink 100 is provided for each battery array unit 10 of the present disclosure, the battery array may be effectively cooled.

Referring to FIGS. 3 and 4, a cooling flow passage of the battery array according to an embodiment of the present disclosure may include a plurality of first flow passages 124 communicating with an inlet port 111 and divided in a front-back direction, a plurality of second flow passages 125 communicating with an outlet port 112 and divided in the front-back direction, and a third flow passage 126 configured to communicate the plurality of first flow passages 124 with the plurality of second flow passages 125.

The upper plate 110 may include the inlet port 111 and the outlet port 112 on a front side of a top surface. A cooling medium cm may be introduced into the heat sink 100 through the inlet port 111 of the upper plate 110, may sequentially flow through the first flow passage 124, the third flow passage 126, and the second flow passage 125, and may be discharged to the outside of the heat sink 100 through the outlet port 112

In this case, the first flow passage 124 and the second flow passage 125 may include a plurality of parallel flow passages. The plurality of parallel flow passages may be parallel to each other

The battery array according to the present disclosure may include the heat sink 100 having a relatively small thickness to achieve high energy density. Accordingly, a height of a flow passage of the heat sink 100 may be low.

Accordingly, according to this configuration of the present disclosure, because the first flow passage 124 and the second flow passage 125 include a plurality of flow passages, the pressure of the cooling medium cm may be distributed. Accordingly, the battery array may be maintained in a stable state.

Also, according to this configuration of the present disclosure, the protrusion 122 of the heat sink 100 may be divided to form a plurality of flow passages in the front-back direction or an X-axis direction. Accordingly, the rigidity of the heat sink 100 may be improved, and the stability of the battery array may be improved.

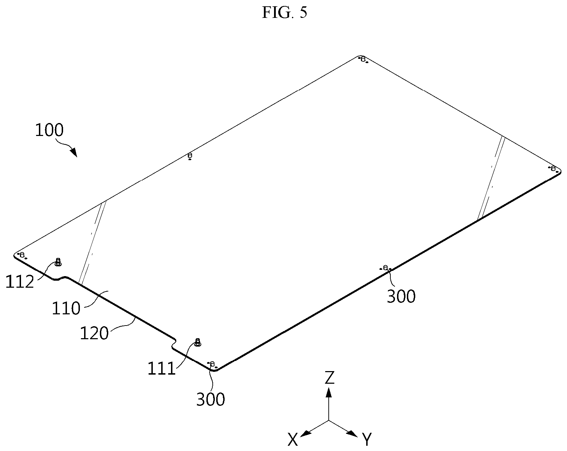

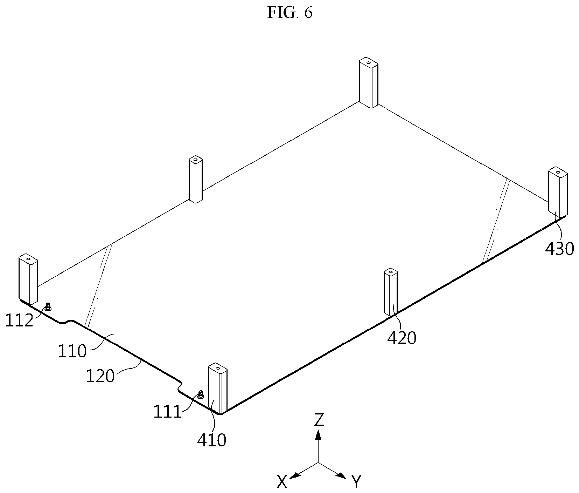

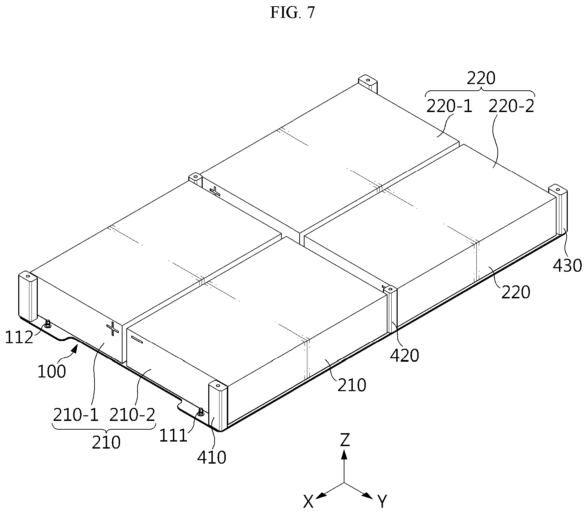

FIG. 5 is a view illustrating the heat sink 100 and a coupling pin 300 of the battery array according to an embodiment of the present disclosure. FIG. 6 is a view illustrating the heat sink 100 and the column 400 of the battery array according to an embodiment of the present disclosure. FIG. 7 is a view illustrating the heat sink 100, the column 400, and the battery cell unit 200 of the battery array according to an embodiment of the present disclosure. Referring to FIGS. 5 to 7, the first battery cell unit 200 of the battery array according to an embodiment of the present disclosure may include a front battery cell unit 210 and a rear battery cell unit 220 arranged in the front-back direction.

Each of the front battery cell unit 210 and the rear battery cell unit 220 may be fastened, fixed, coupled, or attached to the heat sink 100. One pair of front battery cell units 210 may be provided.

According to this configuration of the present disclosure, because the battery array unit includes a plurality of battery cell units 210, 220, energy storage capacity and output power may be improved.

Referring to FIGS. 5 to 7, the one pair of front battery cell units 210 of the battery array according to an embodiment of the present disclosure may be located in a left-right direction. Also, one pair of rear battery cell units 220 may be provided. The one pair of rear battery cell units 220 may be located in the left-right direction.

In this case, the one pair of front battery cell units 210 may include different numbers of battery cells. Accordingly, widths of the one pair of front battery cell units 210 in the left-right direction may be different from each other. For example, the one pair of front battery cell units 210 may respectively include 19 battery cells and 21 battery cells.

Also, the one pair of rear battery cell units 220 may include different numbers of battery cells. Accordingly, widths of the one pair of rear battery cell units 220 in the left-right direction may be different from each other. For example, the one pair of rear battery cell units 220 may respectively include 19 battery cells and 21 battery cells.

Also, the front battery cell unit 210 and the rear battery cell unit 220 facing each other in the front-back direction may include different numbers of battery cells. For example, a front battery cell unit 210-1 including 19 battery cells may face a rear battery cell unit 220-1 including 21 battery cells. A front battery cell unit 210-2 including 21 battery cells may face a rear battery cell unit 220-2 including 19 battery cells.

Also, according to this configuration of the present disclosure, pressure and torque applied to the heat sink 100 may be distributed. Also, a wiring that connects the plurality of battery cell units 210, 220 may be easily arranged.

Referring to FIGS. 5 to 7, the first column 400 of the battery array according to an embodiment of the present disclosure may include a middle column 420 located between the front battery cell unit 210 and the rear battery cell unit 220.

One pair of middle columns 420 may be provided. The one pair of middle columns 420 may be located in the left-right direction. The middle column 420 may contact a rear surface of the front battery cell unit 210 or a front surface of the rear battery cell unit 220.

According to this configuration of the present disclosure, the middle column 420 may prevent a central portion of the heat sink 100 from sagging. Accordingly, the structural rigidity and stability of the battery array may be improved.

Referring to FIGS. 5 to 7, the first column 400 of the battery array according to an embodiment of the present disclosure may include a front column 410 located in front of the front battery cell unit 210 and a rear column 430 located behind the rear battery cell unit 220.

One pair of front columns 410 may be provided. The one pair of front columns 410 may be located in the left-right direction. The front column 410 may contact a front surface of the front battery cell unit 210.

One pair of rear columns 430 may be provided. The one pair of rear columns 430 may be located in the left-right direction. The rear column 430 may contact a rear surface of the rear battery cell unit 220.

According to this configuration of the present disclosure, the front column 410 and the rear column 430 may prevent the heat sink 100 from sagging. Also, the front column 410 and the rear column 430 may appropriately distribute a load applied to the heat sink 100. Accordingly, the structural rigidity and stability of the battery array may be improved.

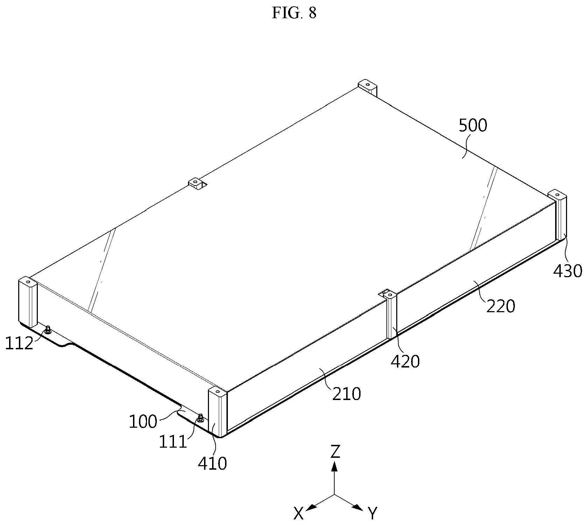

FIG. 8 is a view illustrating the heat sink 100, the column 400, the battery cell unit 200, and a cover 500 of the battery array according to an embodiment of the present disclosure. Referring to FIG. 8, the battery array according to an embodiment of the present disclosure may include an insulating cover 500 located between the first battery cell unit 200 and the second heat sink 100.

The cover 500 may be referred to as the insulating cover 500. The insulating cover 500 may have electrical insulation. The insulating cover 500 may cover a front surface of the front battery cell unit 210. The insulating cover 500 may cover a top surface of the front battery cell unit 210 and a top surface of the rear battery cell unit 220. Also, the insulating cover 500 may cover a rear surface of the rear battery cell unit 220. The insulating cover 500 may electrically insulate the battery array units 10 that are adjacent to each other in the vertical direction. The insulating cover 500 may be provided for each battery array unit 10.

The column 400 may include a coating layer having electrical insulation. Alternatively, the column 400 may be covered with a film having electrical insulation.

According to this configuration of the present disclosure, the electrical safety of the battery array may be improved.

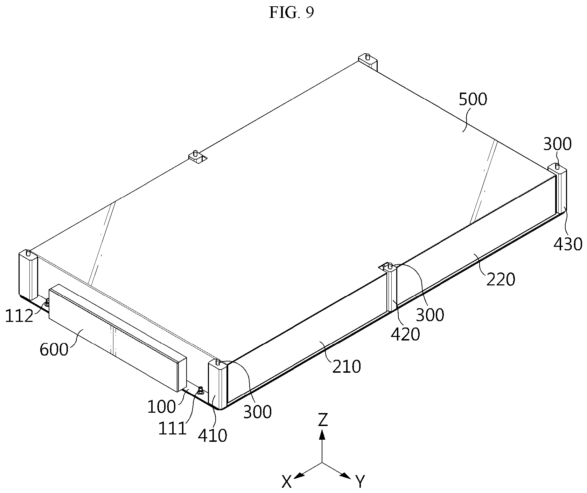

FIG. 9 is a view illustrating the heat sink 100, the column 400, the battery cell unit 200, the cover 500, and a battery management system (BMS) 600 of the battery array according to an embodiment of the present disclosure. Referring to FIG. 9, the battery array according to an embodiment of the present disclosure may include one pair of front columns 410 located in front of the front battery cell unit 210, and the battery array may include the battery management system (BMS) 600 located between the one pair of front columns 410 and electrically connected to the battery cell unit 200. The BMS 600 may be configured to control charging and discharging of the battery cell unit 200. The BMS 600 may be provided for each battery array unit 10. Each BMS 600 may be electrically connected.

According to this configuration of the present disclosure, because the BMS 600 is located between the one pair of front columns 410, space efficiency may be improved. Accordingly, the energy density of the battery array may be improved.

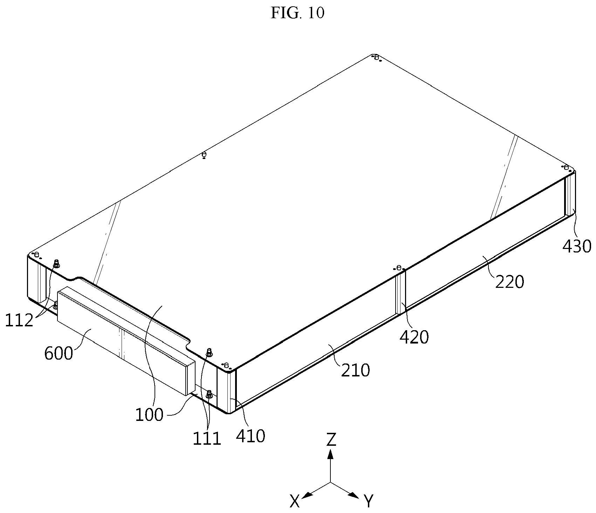

FIG. 10 is a view illustrating stacking of the battery array according to an embodiment of the present disclosure. Referring to FIGS. 9 and 10, the battery array according to an embodiment of the present disclosure may include the coupling pin 300 passing through the second heat sink 100 and including a lower portion inserted into the first column 400 and an upper portion inserted into the second column 400.

The heat sink 100 of the battery array according to an embodiment of the present disclosure may be fastened, coupled, fixed, or inserted into the coupling pin 300. The coupling pin 300 may pass through the upper plate 110 and the coupling portion 121 of the lower plate 120 of the heat sink 100 of the battery array unit 10 adjacent above. The coupling pin 300 may pass through a coupling hole 101 (see FIG. 3) of the upper plate 110 and a coupling hole 127 (see FIG. 3) of the lower plate 120.

The coupling pin 300 may be provided, inserted, coupled, fastened, fixed, or attached for each column 400. At least a part of the coupling part 300 may be inserted, coupled, or fastened to the column 400, and the remaining part may be exposed above the column 400.

For example, the coupling pin 300 may be assembled, coupled, fastened, or fixed to the column 400 in an interference-fit manner.

According to this configuration of the present disclosure, the coupling pin 300 may be easily assembled, coupled, fastened, or fixed to the column 400. Accordingly, the assemblability of the battery array may be improved.

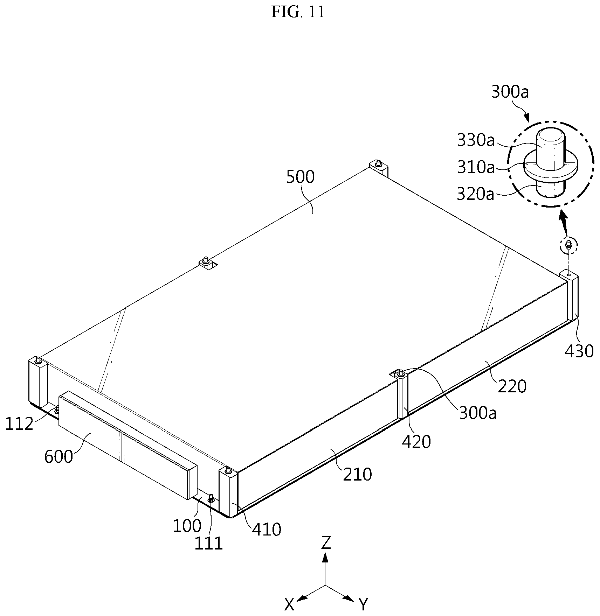

FIG. 11 is a view illustrating a modified embodiment of the coupling pin 300 of the battery array according to an embodiment of the present disclosure. Referring to FIG. 11, a coupling pin 300a according to an embodiment of the present disclosure may include a stopper 310a, a lower pin 320a extending downward from the stopper 310a, and an upper pin 330a extending upward from the stopper 310a. The stopper 310a may have a diameter greater than those of the lower pin 320a and the upper pin 330a. A diameter of the stopper 310a may be similar or equal to a diameter of the column 400. The lower pin 320a may be inserted, coupled, or fastened to an upper side of the column 400. The stopper 310a may limit a coupling depth of the lower pin 320a. Also, the upper pin 330a may be inserted, coupled, or fastened to a lower side of the column 400 adjacent above. The stopper 310a may limit a coupling depth of the upper pin 330a.

According to this configuration of the present disclosure, the assemblability of the coupling pin 300a may be improved.

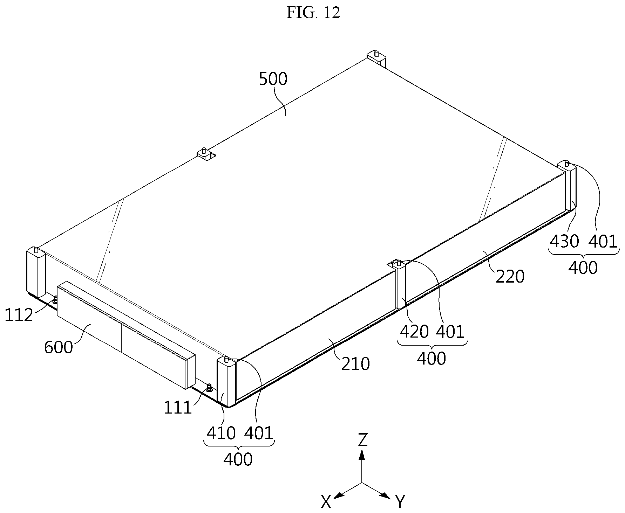

FIG. 12 is a view illustrating a modified embodiment of the column 400 of the battery array according to an embodiment of the present disclosure. Referring to FIG. 12, a coupling pin 401 according to an embodiment of the present disclosure may be integrally formed with each of the columns 410, 420, 430. The coupling pin 401 may extend above each of the columns 410, 420, 430. The coupling pin 401 may be inserted, coupled, or fastened to a lower side of each of the columns 410, 420, 430 adjacent above.

According to this configuration of the present disclosure, the assemblability of the column 400 may be improved.

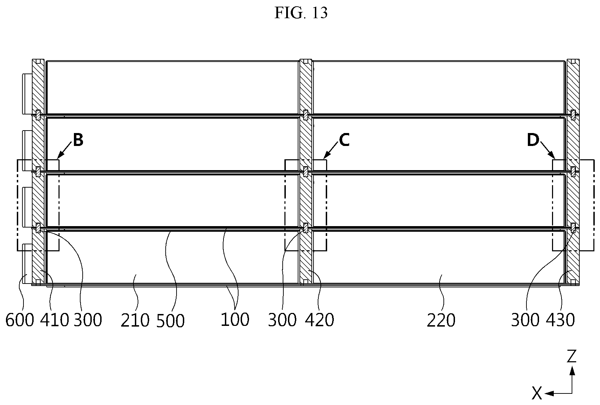

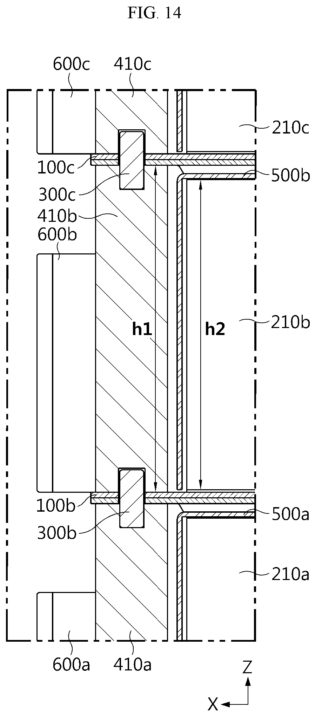

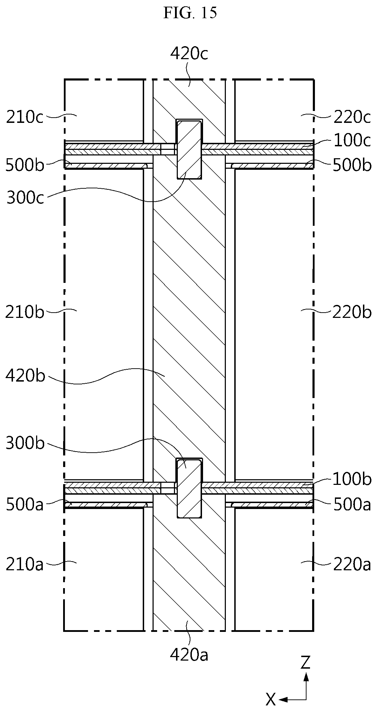

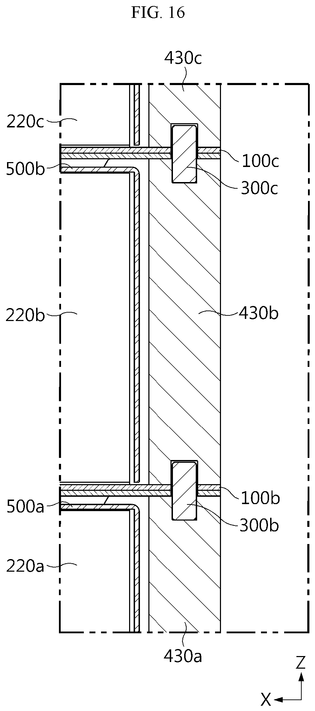

FIG. 13 is a cross-sectional view illustrating some elements, taken along line A-A' of FIG. 1. FIG. 14 is an enlarged view illustrating a portion B of FIG. 13. FIG. 15 is an enlarged view illustrating a portion C of FIG. 13. FIG. 16 is an enlarged view illustrating a portion D of FIG. 13. Referring to FIGS. 13 to 15, first columns 410b, 420b, 430b of the battery array according to an embodiment of the present disclosure may have a height h1 greater than a height h2 of first battery cell units 210b, 220b.

The height h1 of the first columns 410b, 420b, 430b may be a distance from a top surface of a heat sink 100b to a bottom surface of a heat sink 100c. The battery cell units 210b, 220b and an insulating cover 500b may be located between heat sinks 100b, 100c adjacent to each other. Also, the protrusion 122 may be located above the insulating cover 500b. Accordingly, the height h1 of the first columns 410b, 420b, 430b may be greater than the height h2 of the first battery cell units 210b, 220b.

According to this configuration of the present disclosure, the battery cell units 201b, 220b and the insulating cover 500b may be stably located between the heat sinks 100b, 100c.

Referring to FIGS. 13 and 14, a coupling pin 300b may pass through the heat sink 100b. A lower portion of the coupling pin 300b may be inserted, coupled, fixed, or fastened to a front column 410a, and an upper portion of the coupling pin 300b may be inserted, coupled, fixed, or fastened to the front column 410b.

A coupling pin 300c may pass through the heat sink 100c. A lower portion of the coupling pin 300c may be inserted, coupled, fixed, or fastened to the front column 410b, and an upper portion of the coupling pin 300c may be inserted, coupled, fixed, or fastened to a front column 410c. The front battery cell units 210a, 210b, 210c may be sequentially stacked in the vertical direction.

Referring to FIGS. 13 and 15, a lower portion of the coupling pin 300b may be inserted, coupled, fixed, or fastened to a middle column 420a, and an upper portion of the coupling pin 300b may be inserted, coupled, fixed, or fastened to the middle column 420b. Also, a lower portion of the coupling pin 300c may be inserted, coupled, fixed, or fastened to the middle column 420b, and an upper portion of the coupling pin 300c may be inserted, coupled, fixed, or fastened to a middle column 420c.

Referring to FIGS. 13 and 16, a lower portion of the coupling pin 300b may be inserted, coupled, fixed, or fastened to a rear column 430a, and an upper portion of the coupling pin 300b may be inserted, coupled, fixed, or fastened to the rear column 430b. Also, a lower portion of the coupling pin 300c may be inserted, coupled, fixed, or fastened to the rear column 430b, and an upper portion of the coupling pin 300c may be inserted, coupled, fixed, or fastened to a rear column 430c.

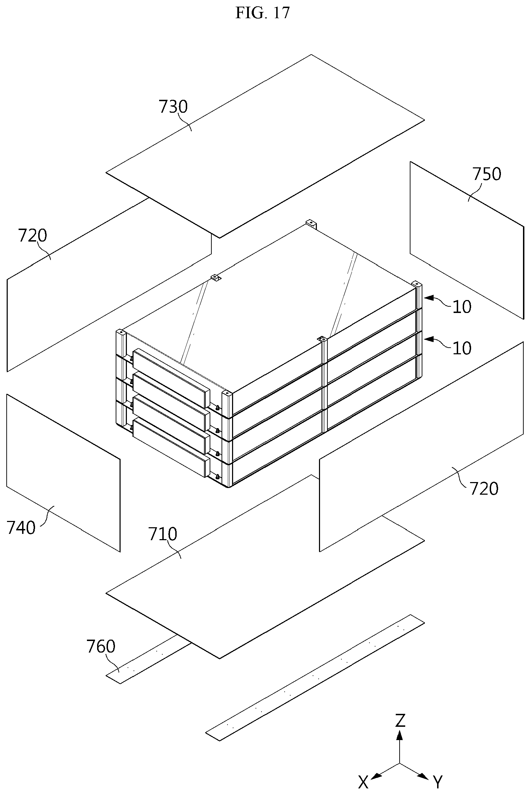

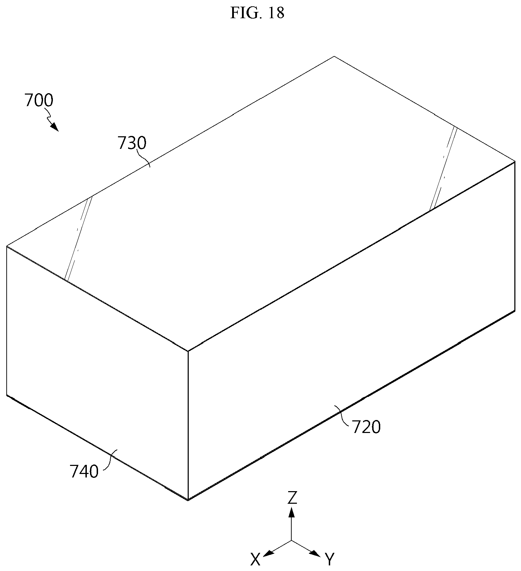

FIG. 17 is a view illustrating the battery array and a case 700 according to an embodiment of the present disclosure. FIG. 18 is a view illustrating a state where the battery array and the case 700 according to an embodiment of the present disclosure are coupled to each other. Referring to FIGS. 17 and 18, the battery array according to an embodiment of the present disclosure may be coupled, fastened, or assembled to the case 700. The case 700 may include a base plate 710 covering a bottom surface of the battery array. The case 700 may include side plates 720 covering a left side and a right side of the battery array. The case 700 may include a top plate 730 covering a top surface of the battery array. The case 700 may include a front plate 740 covering a front surface of the battery array. The case 700 may include a rear plate 750 covering a rear surface of the battery array. The plates 710, 720, 730, 740, 750 constituting the case 700 may be coupled by using welding.

Also, a pad 760 may be located on a bottom surface of the base plate 710. The pad 760 may extend in the front-back direction or the X-axis direction. One pair of pads 760 may be provided, and the one pair of pads 760 may be located in a side direction.

A battery container according to the present disclosure may include a battery array according to the present disclosure. A plurality of battery arrays may be provided. The battery container may include a container housing. The container housing may provide a receiving space in which the battery array is accommodated. Also, the battery container may include a controller for controlling a plurality of battery arrays. In addition, the battery container may further include a sensor for detecting a state of the battery array or a fire-fighting module for controlling a thermal event.

An energy storage system (ESS) according to the present disclosure may include a battery array according to the present disclosure. The ESS may include a plurality of battery containers. The battery container may include a plurality of battery arrays. The ESS may constitute a link group with a combination of a certain number of battery containers and control containers. For example, the control container may perform overall control or diagnosis of the battery container. Also, the control container may include a DC part, an AC part, and a BSC part to control the battery container. Each control container may be connected to a PCS.

It will be understood by one of ordinary skill in the art that when terms indicating directions such as upper, lower, left, right, front, and rear are used, these terms are only for convenience of explanation and may vary according to a position of a target object, a position of an observer, etc.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

## Claims

1. A battery array having a structure in which a plurality of battery cell units are stacked in a vertical direction, the battery array comprising:
a first heat sink having a plate shape;
a first battery cell unit seated on a top surface of the first heat sink;
a first column coupled to the top surface of the first heat sink and extending in the vertical direction; and
a second heat sink having a plate shape, located on the first column, and comprising a bottom surface coupled to the first column.

2. The battery array according to claim 1, further comprising a second battery cell unit seated on a top surface of the second heat sink.

3. The battery array according to claim 1, further comprising a second column coupled to a top surface of the second heat sink and extending in the vertical direction.

4. The battery array according to claim 3, wherein the second column is located in a direction in which the first column extends.

5. The battery array according to claim 3, further comprising a coupling pin passing through the second heat sink and comprising a lower portion inserted into the first column and an upper portion inserted into the second column.

6. The battery array according to claim 1, wherein the first battery cell unit comprises a front battery cell unit and a rear battery cell unit arranged in a front-back direction.

7. The battery array according to claim 6, wherein the first column comprises a middle column located between the front battery cell unit and the rear battery cell unit.

8. The battery array according to claim 6, wherein the first column comprises:
a front column located in front of the front battery cell unit; and
a rear column located behind the rear battery cell unit.

9. The battery array according to claim 6, wherein the first column comprises one pair of front columns located in front of the front battery cell unit,
wherein the battery array further comprises a battery management system (BMS) located between the one pair of front columns and electrically connected to the battery cell unit.

10. The battery array according to claim 1, wherein the first column has a height greater than a height of the first battery cell unit.

11. The battery array according to claim 10, further comprising an insulating cover located between the first battery cell unit and the second heat sink.

12. The battery array according to claim 1, wherein the second heat sink comprises:
an upper plate having a flat plate shape; and
a lower plate comprising a coupling portion coupled to a bottom of the upper plate and a protrusion bent downward from the coupling portion,
wherein the second heat sink is configured so that a cooling flow passage is formed between the upper plate and the protrusion.

13. The battery array according to claim 12, wherein the cooling flow passage comprises:
a plurality of first flow passages communicating with an inlet port and divided in a front-back direction;
a plurality of second flow passages communicating with an outlet port and divided in the front-back direction; and
a third flow passage configured to connect the plurality of first flow passages with the plurality of second flow passages.

14. A battery array unit comprising:
a first heat sink having a plate shape;
a first battery cell unit seated on a top surface of the first heat sink; and
a first column coupled to the top surface of the first heat sink, extending in a vertical direction, and comprising an upper portion configured to be fastened to another component.

15. A battery container comprising the battery array of any one of claims 1 to 13.
